# EUROPEAN PATENT APPLICATION

(11) **EP 4 556 309 A1**
(43) Date of publication of application: **21.05.2025**
(21) Application number: 23210467.9
(22) Date of filing: 16.11.2023
(51) Int. Cl.: B60N 3/00, B60R 7/04

(54) **A TABLE ASSEMBLY FOR EQUIPPING A VEHICLE**

(71) Applicant: VOLVO TRUCK CORPORATION, 405 08 Göteborg (SE)
(72) Inventor: GODEFROY, Manu, 42100 Saint Etienne (FR); ALLIO, Stephane, 69680 Chassieu (FR); CICLET, Alban, 01960 Saint André sur Vieux Jonc (FR)
(74) Representative: Lavoix

(57) **Abstract**

A table assembly (1) for equipping a cab (2) of a vehicle, the cab comprising a dashboard (3) having a recessed area (4) opening onto an interior space of the cab and a reception area (5), the table assembly (1) comprising:
- a swing arm (6) pivotally mounted on the dashboard (3) about a first axis (Z1), configured to be pivotally moved between a stowed position in which the swing arm (6) is housed within the recessed area (4) and at least one extended position in which the swing arm is partly outside the recessed area (4),
- a tray (7) configured to be moved between a storage position in which the tray (7) is housed in the reception area (5) and a table position in which the tray (7) is removably mounted on the swing arm (6) when the latter is in the at least one extended position.

## Description

### TECHNICAL FIELD

The disclosure relates generally to an equipment for equipping a vehicle. In particular aspects, the disclosure relates to a table assembly for equipping a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Aside from the pure driving, the driver of a truck is likely to also perform various activities in their truck, like taking lunches, resting, doing paperwork or sleeping. The driver may also be accompanied by passengers, who will also carry out their own activities either while the truck is driven or when the truck is parked. It is therefore handy to have a table for such activities.

However, usages in a truck cab are multiple and desires of the users are various. For example, some drivers want a table close to them while driving, some others while resting and some others would like to be able to make the office work.

Consequently, there is a need to propose a table that could answer these multiple usages and would be simple to use and store.

### SUMMARY

A first aspect of the disclosure concerns a table assembly for equipping a cab of a vehicle, the cab comprising a dashboard having a recessed area opening onto an interior space of the cab and a reception area,
the table assembly comprising:
- a swing arm pivotally mounted on the dashboard about a first axis, configured to be pivotally moved between a stowed position in which the swing arm is housed within the recessed area and at least one extended position in which the swing arm is partly outside the recessed area,
- a tray configured to be moved between a storage position in which the tray is housed in the reception area and a table position in which the tray is removably mounted on the swing arm when the latter is in the at least one extended position.

The first aspect of the disclosure may seek to improve the situation. A technical benefit may include the integration of the swing arm and of the tray into the dashboard when in the stowed and storage positions, respectively. The table assembly, especially the swing arm does not interfere with the utility space of the driver/passenger when stowed in the stowed position with the recessed area. The table assembly may not impact the visual of the cab since the swing arm is integrated into the dashboard and the tray is placed in the reception area of the dashboard, for example to provide a design aspect and/or a second utility. The table assembly may be used in multiple ways, by the driver and/or by a passenger while the truck is driven or parked, while sitting or resting in different places in the cab.

By "a recessed area opening onto an interior space of the cab", it is meant a housing having an opening which is not closed nor covered so that the space delimited by the housing communicates with the interior space of the cab.

Optionally in some examples, including in at least one preferred example, the tray may be pivotally mounted on the swing arm about a second axis in the at least one extended position. This may allow to adapt the angular position of the tray in the table position.

Optionally in some examples, including in at least one preferred example, the table assembly may comprise a first pivot extending along the first axis, wherein the first pivot is housed within the recessed area, in the stowed position and in the at least one extended position of the swing arm. This may allow to hide the first pivot within the dashboard to obtain an advantageous design effect.

Optionally in some examples, including in at least one preferred example, the first and second axes may be parallel to each other. The tray may be horizontal at least in the table position.

Optionally in some examples, including in at least one preferred example, at least one of the first and second axis, preferably each of the first and second axis, may be substantially vertical.

Optionally in some examples, including in at least one preferred example, the table assembly may comprise a second pivot extending along the second axis.

Optionally in some examples, including in at least one preferred example, the second pivot may be attached to the tray. The swing arm may be configured to receive the second pivot in the table position of the tray. The swing arm for example comprises a pin or an opening so as to receive the second pivot in the table position of the tray.

Optionally in some examples, including in at least one preferred example, the swing arm may have a proximal end portion in which the first pivot is located and a distal end portion in which the second pivot is to be located when the tray is mounted on the swing arm.

Optionally in some examples, including in at least one preferred example, the dashboard comprising an outer wall, the swing arm may be flush with the outer wall of the dashboard in the stowed position. This means that the swing arm is fully integrated into the dashboard, i.e. within the recess formed by the recessed area. The swing arm forms for example part of the outer wall, thus being part of the external aspect of the outer wall.

Optionally in some examples, including in at least one preferred example, the dashboard comprising an upper surface and a box, preferably opening onto the upper surface of the dashboard, the tray may be configured to be a cover of the box when in the storage position. In such case, the tray may have a role of cover in the storage position.

Optionally in some examples, including in at least one preferred example, the tray may comprise raised edges, preferably on a peripheral portion. In such case, the tray may be used as open storage in the storage position. A user can put things on it for example such as a smartphone, a pen, and so on.

Optionally in some examples, including in at least one preferred example, the swing arm may have an elongated shape. The swing arm may have a form of S. The swing arm extends preferably parallel to a horizontal plane. The shape of the swing arm may be designed in order to be integrated within the dashboard in the stowed position. In this case, such a shape may be an S, for example extending in a plane parallel to a horizontal plane. The swing arm may have another elongated shape, such as another curved shape or a rectilinear shape, extending in one plane or not.

The swing arm being pivoted about the first axis may be pivotable from the stowed position to maximum pivotable position, such that the tray being pivoted along with the swing arm defines a radius of coverage.

Radius of coverage may include a first region, a second region, and a third region, wherein the first region is in proximity to the passenger seat, the second region is in proximity to a bunk bed, and the third region is in proximity to the drive seat.

The table assembly may be adjustable and orientable to provide various geometrical configurations. The table assembly may be easy to dismantle and is advantageously safe to operate.

A second aspect of the present disclosure concerns a dashboard assembly for a vehicle, comprising :
- a dashboard comprising a recessed area opening onto an interior space of a cab and a reception area and
- a table assembly as recited above.

A technical benefit may include such an integration in a dashboard assembly of a swing arm and a tray when in the stowed and storage positions respectively. The table assembly, when not in use, does not need to be stored in a case in the back of the vehicle for example.

Optionally in some examples, including in at least one preferred example, the recessed area may have a form, preferably of S, similar to the one of the swing arm for receiving the swing arm adjusted in the recessed area in the stowed position.

Optionally in some examples, including in at least one preferred example, the first pivot may be attached to the dashboard. The swing arm may be linked to the dashboard, for example by the first pivot, whatever the position of the swing arm, whereas the tray may be entirely removable from the dashboard.

Optionally in some examples, including in at least one preferred example, the reception area may comprise an opening for receiving a fastening element of the tray. The fastening element may be fastened to a lower surface of the tray. Such a fastening element is for example the second pivot. In such case, the second pivot may have a role of connection between the tray and the dashboard in the storage position and may have a role of connection between the tray and the swing arm in the table position.

Optionally in some examples, including in at least one preferred example, the outer wall of the dashboard with which the swing arm may be flush may face a seat of the cab, in particular a passenger's seat. In such case, the recessed area may be in a substantially vertical part of the dashboard.

Optionally in some examples, including in at least one preferred example, the dashboard may comprise an upper surface substantially facing a cab ceiling and comprising the reception area. The reception area may be a delimited surface. Alternatively the reception area may consist of a non-delimited part of the upper surface of the dashboard.

The installation of the table assembly may not negatively affect the comfort of the cab. In particular, noise and vibration levels may notbe increased oncethe table assembly is fitted in the dashboard assembly.

A third aspect of the present disclosure concerns a vehicle, preferably a truck, having a dashboard assembly as described above.

A technical benefit may include to provide a user of the vehicle with a table assembly that may be used for several different uses and that may be stored in the dashboard of the cab when not used.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is a table assembly equipped in a cab of a vehicle comprising a dashboard, according to an example, shown schematically and in perspective, the swing arm being in an extended position and the tray being in the table position.
FIG. 2 shows schematically and in perspective the table assembly according to an example, the swing arm being in the stowed position and the tray being in a storage position.
FIG. 3 shows schematically and in perspective the table assembly according to an example, the swing arm being in the stowed position and the tray being in a storage position.
FIG. 4 shows schematically and in perspective the table assembly according to an example, the swing arm being moved in an extended position and the tray being in a storage position.
FIG. 5 shows schematically and in perspective the table assembly according to an example, the swing arm being in an extended position and the tray being moved from a storage position upwardly.
FIG. 6 shows schematically and in perspective the table assembly according to an example, the swing arm being in an extended position and the tray being moved towards the swing arm.
FIG. 7 shows schematically and in perspective the table assembly according to an example, the swing arm being in an extended position and the tray being moved towards the swing arm to be connected thereto in a table position.
FIG. 8 shows schematically and in perspective the table assembly according to an example, the swing arm being in an extended position and the tray being in the table position, being mounted on the swing arm.
FIG. 9 is a schematic top view of the dashboard assembly in perspective, according to one example, with the table assembly, the swing arm being shown in several possible extended positions with the tray being mounted thereto and being shown in several possible angular positions.
FIG. 10 is a schematic and partial view of the table assembly according to one example.
FIG. 11 shows, partially, schematically and in perspective, an interior of a cab of a vehicle equipped with a dashboard assembly comprising a table assembly accordingto one example, shown in a table position of the tray.
FIG. 12 is a view similar to FIG. 11 with another table position of the tray.
FIG. 13 is a view similar to FIG. 11 with another table position of the tray.
FIG. 14 is a view similar to FIG. 11 with another table position of the tray.

### DETAILED DESCRIPTION

The detailed description set forth below provides information and examples of the disclosed technology with sufficient detail to enable those skilled in the art to practice the disclosure.

There is a need for a table in a vehicle, especially in a truck. The uses of a table in a truck cab are numerous. Some drivers want a table close to them while driving, some others while resting, some others would like to be able to make the office work on the table. Many tables are available on the truck market and other vehicle market. However, all of them are dedicated to a use in one location. Furthermore, some tables must be stored in the back of the vehicle when not used.

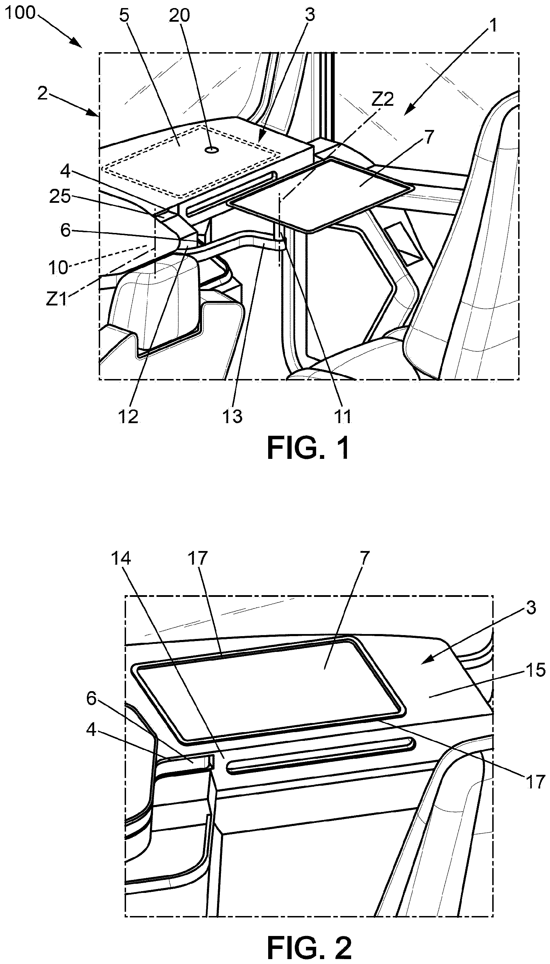

FIG.1 and 2 show a table assembly 1 equipped in a cab 2 of a vehicle 100, the cab comprising a dashboard 3 having a recessed area 4 opening onto an interior space of the cab and a reception area 5. The interior space of the cab is partly shown in FIG. 1. The table assembly 1 comprises a swing arm 6 pivotally mounted on the dashboard 3 about a first axis Z1. The swing arm 6 is configured to be pivotally moved between a stowed position, shown for example in FIG. 2, in which the swing arm 6 is housed within the recessed area 4 and at least one extended position, as shown in FIG. 1, in which the swing arm 6 is partly outside the recessed area 4. In this example, the swing arm 6 has an elongated shape, having a form of a S, extending in a plane parallel to a horizontal plane. The swing arm 6 has a height of 60 cm from the floor, this height being substantially equal to the height of the recessed area 4. The swing arm 6 may be made of metal such as steel, aluminum. The recessed area4 may consist of a recess in the dashboard 3 forming an empty volume for housing the swing arm 6 in the stowed position, this volume being opened through an opening 25 onto the interior space of the cab. This opening 25 may have at least the dimensions of the swing arm 6 in order to let him pivot partly out of the recessed area 4. In the example shown in FIG. 1 and 2, the dimensions of the opening 25 are quite adjusted to the dimensions of the swing arm 6.

The table assembly 1 also comprises a tray 7 configured to be moved between a storage position in which the tray 7 is housed in the reception area 5, as shown in FIG. 2, and a table position in which the tray 7 is removably mounted on the swing arm 6 when the latter is in an extended position, as shown in FIG. 1. The reception area 5 may consist of a part of an upper surface of the dashboard 3.

The table assembly 1 may comprise a first pivot 10 extending along the first axis Z1. The first pivot 10 may be housed within the recessed area 4, as shown in this example, in the stowed position and in the at least one extended position of the swing arm 6. The first pivot 10 may be attached to the dashboard 3 within the recessed area.

The tray 7 may be pivotally mounted on the swing arm 6 about a second axis Z2 in every extended position, as in the one shown in FIG. 1.

In this example, the first and second axes Z1, Z2 are parallel to each other. At least one of the first and second axis Z1, Z2, in this example each of the first and second axis, is substantially vertical. As shown in FIG. 1, the table assembly 1 may comprise a second pivot 11 extending along the second axis Z2. The second pivot 11 may be attached to the tray 7 and the swing arm 6 may be configured to receive the second pivot 11 in the table position of the tray 7, for example comprises a pin or an opening configured to receive the second pivot.

The first pivot 10 may be a piece fastened to or being part of the swing arm 6 or the dashboard 3 in the recessed area 4. The first pivot 10 may extend along the first axis Z1. The first pivot 10 may allow a pivoting movement between the swing arm 6 and the recessed area 4.

The second pivot 11 may be a piece fastened to or being part of the tray 7 or the swing arm 6. The second pivot 11 may extend along the second axis Z2. The second pivot 11 may allow a pivoting movement between the tray 7 and the swing arm 6.

As shown in FIG. 1, the swing arm 6 may have a proximal end portion 12 in which the first pivot 10 is located and a distal end portion 13 in which the second pivot 11 is to be located when the tray 7 is mounted on the swing arm 6. The length of the swing arm 6 between the two ends of the swing arm 6, following the possible curvature(s) of the swing arm 6 may be comprised between 30 cm and 50 cm.

In this example, the dashboard 3 comprises an outer wall 14 and the swing arm 6 is flush with the outer wall 14 of the dashboard 3 in the stowed position, as shown in FIG. 2. The swing arm 6 may have a shape complementary to the shape of the recessed area 4. The swing arm 6 may not protrude from the outer wall 14, especially from the opening 25 of the recessed area, in a stowed position. The swing arm 6 may be fully integrated into the dashboard 3. The recessed area 4 may be positioned under part of an upper surface of the dashboard 3, the thickness between an upper edge of the recessed aera 4 and the upper surface being comprised between 1 mm and 3 mm.

The tray 7 may comprise raised edges 17, in this example on a peripheral portion. This may allow to retain objects that could be placed on the tray 7. The tray 7 has a substantially rectangular and planar shape in this example. The tray 7 may have a length comprised between 40 cm and 50 cm and a width comprised between 25 and 35 cm. The tray 7 may comprise at least one material of the group consisting of a polymer, wood and leather. The edges of the tray 7 may be round-shaped.

In the example of FIG. 1, the reception area 5 comprises an opening 20 for receiving the second pivot 11 or another protruding part of the tray 7 protrudingfrom a lower surface of the tray 7 which is in contact with the reception area 5 in the storage position. Such an opening 20 may be used to link the tray 7 to the dashboard 3, especially to an upper surface of the dashboard 3 facing a ceiling of the cab. The reception area 5 may be part of this upper surface as shown in FIG. 1. The reception area 5 may form a planar surface of the dashboard 3. The planar surface may be substantially horizontal. The reception area 5 may not be delimited on the upper surface as shown in the example of FIG. 1.

FIG. 1 shows the tray 7 used as a table, in the table position. FIG. 2 shows the tray 7 used as a design element.

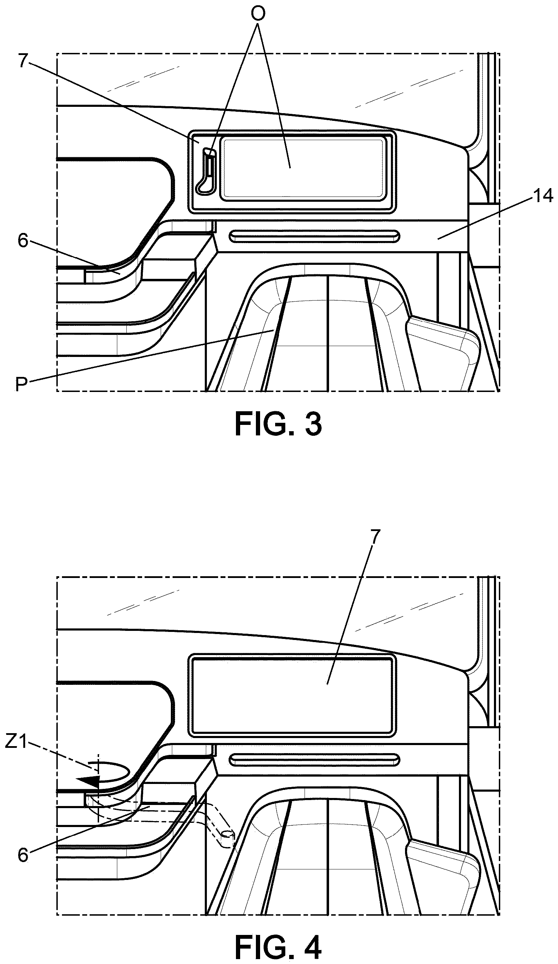

FIGs. 3 to 8 show different steps for moving the swing arm 6 from the stowed position to an extended position and the tray 7 from the storage position to the table position.

FIG. 3 shows the swing arm 6 in the stowed position and the tray 7 in the storage position. The tray 7 may be used as a support or storage area for objects O as shown in FIG. 3. The outer wall 14 of the dashboard 3 with which the swing arm 6 is flush faces a seat P of the cab, in particular a passenger's seat, next to the driver's seat. FIG. 3 shows the tray 7 used as an open storage.

FIG. 4 shows, with the arrow, the pivoting movement of the swing arm 6 about the first axis Z1 from the stowed position in which it is integrated into the recessed area 4 to an extended position in which it protrudes from the recessed area 4, being ready to receive the tray 7. The swing arm 6 is partially pulled out of the dashboard 3, out of the recessed area 4. There may be several different angular positions of the swing arm 6 defining several different extended positions thereof. These angular positions may be marked by a friction or by a mechanical resistance, the first pivot 10 comprising for example at least one protrusion causing such a friction or resistance. Alternatively, there may be no resistance when pivoting the swing arm 6.

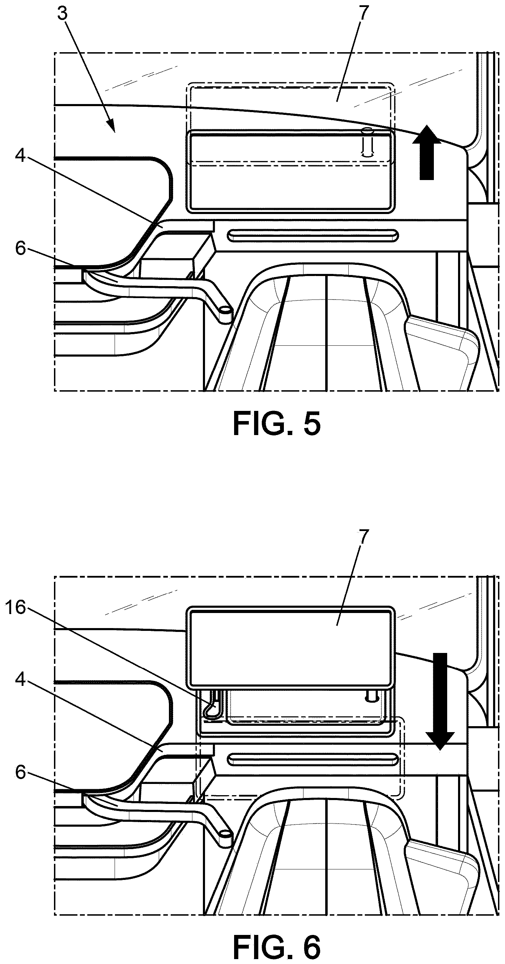

FIG. 5 shows, according to the arrow, an upward movement for removing the tray 7 from the reception area 5 of the dashboard 3. The tray 7 is raised. Then, as shown in FIG. 6, the tray 7 is carried towards the swing arm 6 as shown by the arrow. As shown in FIG. 5 and 6, the recessed area 4 of the dashboard 3 receiving the swing arm 6 in the stowed position has a hollow form of S similar to the one of the swing arm 6, i.e. a complementary shape, so that the swing arm 6 is adjusted in the recessed area 4 in the stowed position.

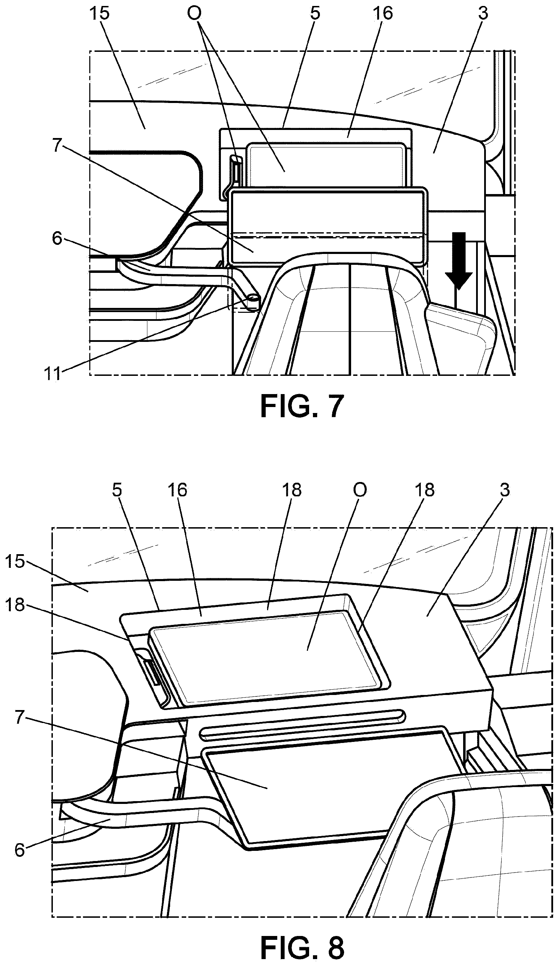

FIG. 7 shows the mounting of the tray 7 onto the swing arm 6 thanks to the second pivot 11, the movement being shown by the arrow. The tray 7 is put on the swing arm 6. FIG. 8 shows an extended position of the swing arm 6 on which the tray 7 is mounted in a table position. It is to be noted that FIG. 7 and 8 also show that the dashboard 3 comprises an upper surface 15 and a box 16, in this example opening onto the upper surface 15 of the dashboard 3. The tray 7 is configuredto be a coverof the box 16 whenin the storage position. In FIG. 7 and 8, objects O are stored in the box 16. The upper surface 15 of the dashboard 3 substantially faces a cab ceiling and comprises the reception area 5. In this example, the reception area 5 is delimited by the top portion of the lateral walls 18 of the box 16. The box 16 is formed within the thickness of the dashboard 3. FIG. 7 and 8 show the tray 7 used as a cover for a storage.

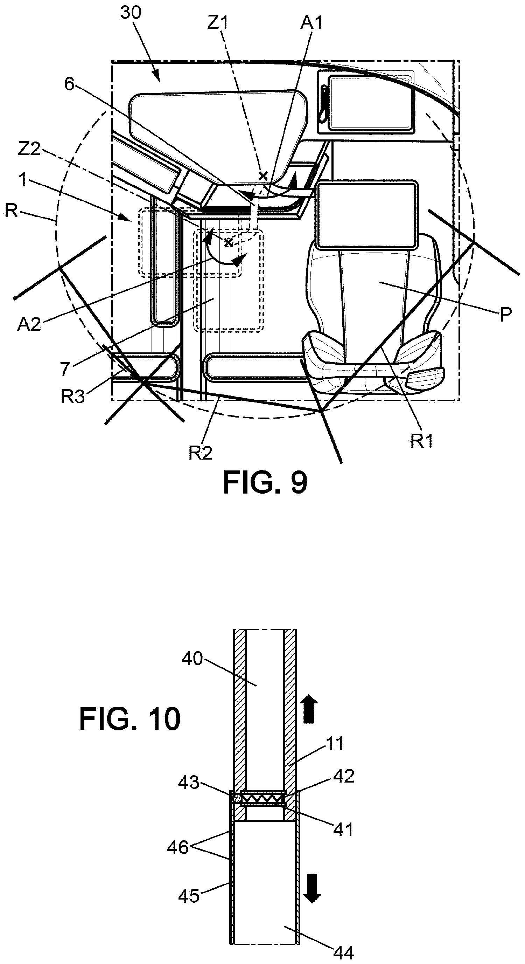

FIG. 9 shows, in a dashboard assembly 30 according to one example, two extended positions of the swing arm 6 pivoting about the first axis Z1 with different angular positions within the angle range shown by the double arrow A1. This angle range may be comprised between 90° and 180°. FIG. 9 also shows the possible pivoting of the tray 7 about the second axis Z2 for having desired angular position within the angle range shown by the double arrow A2. This angle range may be comprised between 45° and 135°, being for example equal to 90°. This modularity allows a user to choose between multiple positions of the table assembly 1, i.e. of the swing arm 6 and of the table position too, in the extended and table positions. The position of the table assembly 1 when used may be adjusted using the double rotation shown by arrows A1 and A2.

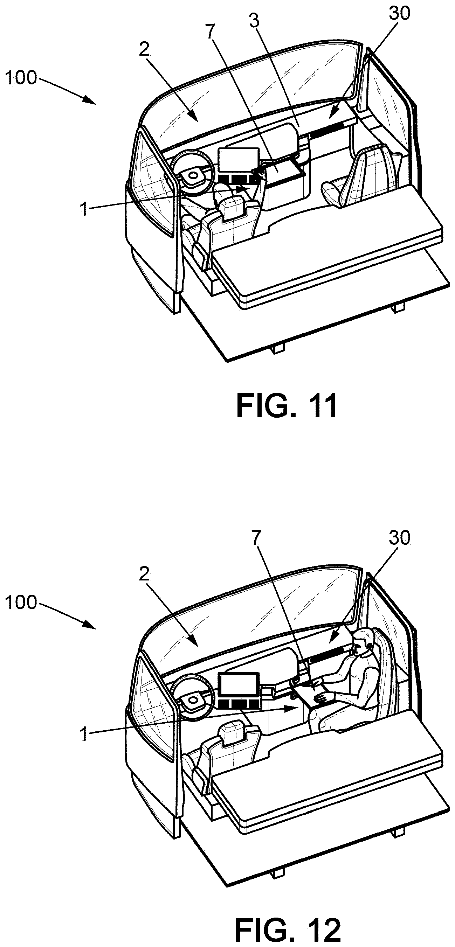

Furthermore, a dotted line in FIG. 9 indicates the radius of coverage R of the table assembly 1 when being pivoted. The radius of coverage R shows that it can be used in three positions shown in FIG. 9 and also shown respectively in FIG. 11, 12 and 14 that are described below.

Radius of coverage R includes a first region R1, a second region R2, and a third region R3, wherein the first region R1 is in proximity to the passenger seat, the second region R2 is in proximity to a bunk bed, and the third region R3 is in proximity to the drive seat.

The tray 7 may be easily dismounted from the swing arm 6. The tray may be moved in the storage position. The swing arm 6 may be moved in the stowed position within the recessed area 4.

The dashboard assembly 30 has to be adapted to accommodate the swing arm 6 and the tray 7. In particular, the dashboard 3 comprises the recessed area 4 and the reception area 5 for respectively housing the swing arm 6 and the tray 7, as explained above.

FIG. 10 shows an example of a second pivot 11 for a pivoting connection between the tray 7 and the swing arm 6. In this example, the tray 7 comprises a first portion of tube 40 integrating a housing 41 for receiving a spring 42 perpendicular to the axis of the second pivot 11, as shown. A ball 43 is put at an open end of the housing, and at an end of the spring 42. The swing arm 6 comprises a second portion of hollow tube 44 into which the first portion of tube 40 may slide. The second portion of hollow tube 44 has an internal wall 45 into which spaces 46 for housing the ball 43 are provided. These spaces 46 cooperating with the ball 43 allow the connection between the tray 7 and the swing arm 6 and, in this example, determine particular positions for a height adjustment of the tray 7 relative to the swing arm 6.

FIG. 11 to 14 show the interior space of the cab of a vehicle, being a truck in this example, having a dashboard assembly 30 comprising a dashboard 3 and a table assembly 1 as described above.

In these Figures, the swing arm 6 is shown in three different extended positions after pivoting along the radius of coverage, and the tray 7 in different table positions for different uses of the table assembly 1. FIG. 11 to 14 show the availability of the table assembly 1 from several positions of the user.

As an example, FIG. 11 shows a first extended position of the table assembly 1 in which the table assembly 1 is used by the driver seating on the driver seat, as an armrest.

FIG. 12 shows the use of the table assembly 1 in a second extended position while the vehicle 100 is parked, the user being in this example seated on a passenger's seat, the latter being pivoted so that the seat back substantially faces the passenger's door.

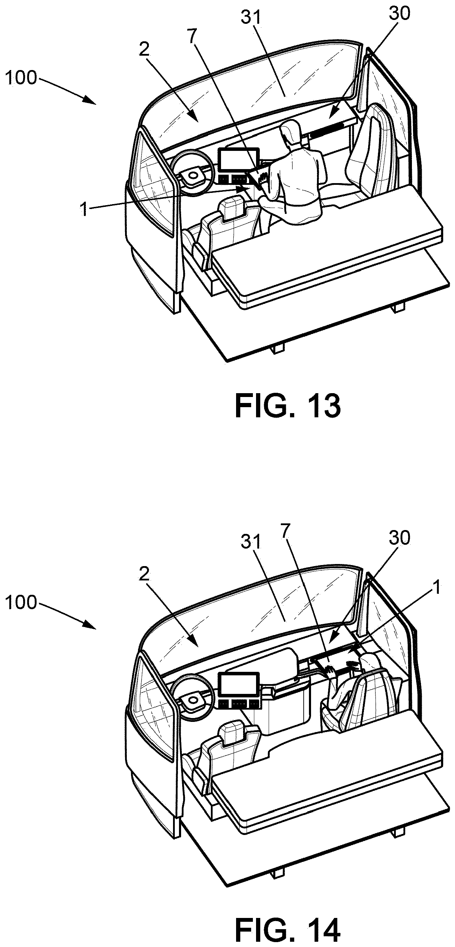

FIG. 13 shows the use of the table assembly 1 while the vehicle 100 is parked, the user being in this example seated on a bench, which may be the bunk bed 50 in a folded position, extending behind the seats of the driver and the passenger. The table assembly 1 is therefore positioned in the first extended position so as to be used between the places of the driver and the passenger, in front of the user.

FIG. 14 shows the use of the table assembly 1 in a third extended position while the vehicle 100 is parked, the user being in this example seated on a passenger's seat, the latter facing the dashboard 3 and the windscreen 31 of the vehicle 100.

The tray 7 may be equipped with added features such as a cup holder, a pen holder, clip for paper, for phone, for tablet or other electronic devices.

The table assembly 1 may be height adjustable.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other feature s, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those di scussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes oflimitation, the scope of the disclosure being set forth in the following claims.

## Claims

1. A table assembly (1) for equipping a cab (2) of a vehicle, the cab comprising a dashboard (3) having a recessed area (4) opening onto an interior space of the cab and a reception area (5),
the table assembly (1) comprising:
- a swing arm (6) pivotally mounted on the dashboard (3) about a first axis (Z1), configured to be pivotally moved between a stowed position in which the swing arm (6) is housed within the recessed area (4) and at least one extended position in which the swing arm is partly outside the recessed area (4),
- a tray (7) configured to be moved between a storage position in which the tray (7) is housed in the reception area (5) and a table position in which the tray (7) is removably mounted on the swing arm (6) when the latter is in the at least one extended position.

2. The table assembly (1) according to claim 1, wherein the tray (7) is pivotally mounted on the swing arm (6) about a second axis (Z2) in the at least one extended position.

3. The table assembly (1) according to claim 1 or 2, comprising a first pivot (10) extending along the first axis (Z1), wherein the first pivot (10) is housed within the recessed area (4), in the stowed position and in the at least one extended position of the swing arm (6).

4. The table assembly (1) according to any of the preceding claims, comprising a second pivot (11) extending along the second axis (Z2).

5. The table assembly (1) according to any of the preceding claims, the dashboard comprising an outer wall (14), wherein the swing arm (6) is flush with the outer wall (14) of the dashboard (3) in the stowed position.

6. The table assembly (1) according to any of the preceding claims, the dashboard (3) comprising an upper surface (15) and a box (16), wherein the tray (7) is configured to be a cover of the box (16) when in the storage position.

7. The table assembly (1) according to claim 1, wherein the swing arm (6) being pivoted about the first axis (Z1) is pivotable from the stowed position to maximum pivotable position, such that the tray (7) being pivoted along with the swing arm (6) defines a radius of coverage (R).

8. The table assembly (1) according to claim 7, wherein radius of coverage (R) includes a first region (R1), a second region (R2), and a third region (R3), wherein the first region (R1) is in proximity to the passenger seat, the second region (R2) is in proximity to a bunk bed, and the third region (R3) is in proximity to the drive seat.

9. A dashboard assembly (30) for a vehicle, comprising:
- a dashboard (3) comprising a recessed area (4) opening onto an interior space of a cab (2) and a reception area (5) and
- a table assembly (1) as recited in any of the preceding claims.

10. The dashboard assembly (30) according to claim 9, wherein the swing arm (6) has a form of S and extends parallel to a horizontal plane, wherein the recessed area (4) has a form of S similar to the one of the swing arm (6) for receiving the swing arm (6) adjusted in the recessed area (4) in the stowed position.

11. The dashboard assembly (30) according to claim 9 or 10, the table assembly (1) being according to claim 3, wherein the first pivot (10) is attached to the dashboard (3).

12. The dashboard assembly (30) according to any of claim 9 to 11, the table assembly (1) being according to claim 4, wherein the reception area (5) comprises an opening (20) for receiving the second pivot (11).

13. The dashboard assembly (30) according to any of claims 9 to 12, the table assembly (1) being according to claim 5, wherein the outer wall (14) of the dashboard (3) with which the swing arm (6) is flush faces a seat of the cab, in particular a passenger's seat.

14. The dashboard assembly (30) according to any of claims 9 to 13, wherein the dashboard (3) comprises an upper surface (15) substantially facing a cab ceiling and comprising the reception area (5).

15. A vehicle including a truck, having a dashboard assembly (30) according to any of claims 9 to 14.
